# EUROPEAN PATENT APPLICATION

(11) **EP 4 120 511 A1**
(43) Date of publication of application: **18.01.2023**
(21) Application number: 21918265.6
(22) Date of filing: 13.01.2021
(51) Int. Cl.: H02J 50/20, H01Q 21/24

(54) **WIRELESS CHARGING SYSTEM, WIRELESS CHARGING TRANSMITTING DEVICE AND WIRELESS CHARGING RECEIVING DEVICE**

(71) Applicant: Huawei Digital Power Technologies Co., Ltd., Shenzhen, Guangdong 518043 (CN)
(72) Inventor: DU, Zhixia, Shenzhen, Guangdong 518129 (CN); PAN, Ning, Shenzhen, Guangdong 518129 (CN); CHENG, Yuan, Shenzhen, Guangdong 518129 (CN)
(74) Representative: Gill Jennings & Every LLP
(86) International application number: PCT/CN2021/071499
(87) International publication number: WO 2022/151049

(57) **Abstract**

This application relates to the field of wireless charging technologies. A wireless charging system provided in this application includes a wireless charging transmitting apparatus and a wireless charging receiving apparatus. The wireless charging transmitting apparatus includes a transmit antenna array and a first controller. The wireless charging receiving apparatus includes a power receiving antenna and a second controller. When receiving a charging request signal from the second controller, the first controller controls the transmit antenna array to successively switch to each polarization state in a plurality of polarization states to transmit a power signal. The second controller sends, to the first controller, feedback information indicating a magnitude of energy obtained from the power signal. The first controller determines an optimal polarization state based on the feedback information, so that the transmit antenna array transmits a power signal in the optimal polarization state. In this way, optimal polarization state detection of a downlink channel can be implemented to cope with different transmission paths and states of a wireless charging receiving apparatus, thereby ensuring polarization matching between a transmit antenna and a receive antenna, and greatly improving energy transmission efficiency.

## Description

### TECHNICAL FIELD

The present invention relates to the field of wireless charging technologies, and specifically, to a wireless charging system, a wireless charging transmitting apparatus, and a wireless charging receiving apparatus to perform far-field wireless charging.

### BACKGROUND

A far-field wireless charging technology is a technology that uses an electromagnetic wave as a medium to transfer energy between devices not in contact with each other to perform remote charging. A transmission distance of the technology reaches a meter level, and charging flexibility can be improved.

A far-field wireless charging system mainly includes a radio frequency front-end circuit and a transmit antenna on a transmit end for signal generation and control, and a receive antenna and an energy conversion and control circuit module on a receive end. Charging efficiency of the system mainly depends on DC (Direct Current; direct current)-RF (Radio Frequency; radio frequency) energy conversion efficiency, RF-RF space transmission efficiency, RF-DC energy conversion efficiency, and the like, where RF-RF space transmission efficiency is extremely important.

The RF-RF space transmission efficiency is affected by both a divergence characteristic of an electromagnetic wave and a polarization characteristic of the electromagnetic wave. When a position deviation between the receive end and the transmit end occurs due to an installation manner, a placement direction, a movement, or the like, or an angle difference between an electromagnetic wave arriving at the receive end and a polarization direction of the receive antenna causes polarization mismatch, energy transmission efficiency greatly decreases. In the conventional technology, an electromagnetic wave is focused on the receive end mainly by using a technology such as beamforming, to resolve an offset alignment problem, to improve energy transmission efficiency.

For example, in a solution, a phase shifter array is added to a front end of an antenna array, a radiation direction of an electromagnetic wave is adjusted in a phase compensation manner, and energy is aggregated in a direction of the receive end, so that RF-RF energy transmission efficiency is improved. However, this solution does not involve optimization of polarization efficiency between a transmit antenna and a receive antenna. An electric field is vectorial, and an electromagnetic wave itself has a polarization direction. Therefore, even if energy is aggregated to the receive end, a polarization direction difference between the receive antenna and the transmit antenna still causes a decrease in receiving efficiency.

In addition, because a far-field wireless charging system is similar to a wireless communication system, it may be considered that a dual-polarized antenna array that is fed at the same time is used for signal transmission as in a communication base station, and two antennas that are mutually independent in a polarization direction are nested and transmit signals at the same time. In this case, a positive and negative 45-degree dual-polarized antenna may be used. This is because after a plurality of times of reflection, refraction, and diffraction propagation are performed on a transmitted linearly-polarized electromagnetic wave, a change has occurred when the wave arrives at the receive end. The positive and negative 45-degree dual-polarized antenna may reduce a polarization loss, accurately receive an electromagnetic wave, and improve reliability of signal transmission. However, in this solution, although the polarization loss is reduced, signals are simultaneously sent by using two antenna arrays in different polarization directions, which causes energy waste and low energy transmission efficiency. Therefore, the solution is not applicable to a remote wireless charging system for energy transmission.

There is still another solution. In a manner of transmitting a beacon signal by a receive end and receiving, detecting, and analyzing the beacon signal by a transmit end, related polarization information is obtained and dynamic matching is performed, to perform wireless charging.

However, when inventors create the present invention, it is found that a polarization information path analyzed in the solution is from the receive end to the transmit end, and is reciprocal to a path from the transmit end to the receive end during wireless energy transmission. Therefore, transmission paths are required to be reciprocal. When the transmission paths are not reciprocal, the solution fails.

### SUMMARY

In view of the foregoing problems in the conventional technology, this application provides a wireless charging system, a wireless charging transmitting apparatus, and a wireless charging receiving apparatus, to cope with different transmission paths and states of the wireless charging receiving apparatus, to ensure polarization matching between a transmit antenna and a receive antenna to maximize energy receiving power.

To achieve the objective, a first aspect of this application provides a wireless charging system, including a wireless charging transmitting apparatus and a wireless charging receiving apparatus. The wireless charging transmitting apparatus includes: a transmit antenna array, configured to transmit a power signal in each polarization state in a plurality of polarization states, where each polarization state includes a polarization direction of an antenna of the transmit antenna array; a first controller, where the wireless charging receiving apparatus includes a power receiving antenna, configured to receive the power signal; and a second controller, where when receiving a charging request signal from the second controller, the first controller controls the transmit antenna array to successively switch to each polarization state in the plurality of polarization states to transmit the power signal. The second controller sends feedback information to the first controller, where the feedback information indicates a magnitude of energy obtained from the power signal. The first controller determines an optimal polarization state based on the feedback information, and controls the transmit antenna array to switch to the optimal polarization state to transmit the power signal, where the optimal polarization state is a polarization state with maximum energy.

The feedback information may be information that directly indicates a polarization state in which the wireless charging receiving apparatus obtains the maximum energy. In this case, the wireless charging transmitting apparatus may directly learn of the optimal polarization state. The feedback information may alternatively be information indicating a magnitude of energy obtained by the wireless charging receiving apparatus in each polarization state. In this case, the wireless charging transmitting apparatus performs comparison to determine the optimal polarization state.

In the wireless charging system, the transmit antenna array of the wireless charging transmitting apparatus successively switches to each polarization state in the plurality of polarization states to transmit the power signal, and it is determined, based on the feedback information sent by the wireless charging receiving apparatus, the polarization state in which the maximum energy is obtained by the wireless charging receiving apparatus, so that the transmit antenna array transmits the power signal in the polarization state. Therefore, the wireless charging transmitting apparatus and the wireless charging receiving apparatus can cooperate to implement optimal polarization state detection of a downlink channel, intelligently adjust and control a polarization direction of transmitting an electromagnetic wave, and reduce a polarization mismatch loss. In this way, different transmission paths and states of the wireless charging receiving apparatus can be coped with, and polarization matching between a transmit antenna and a receive antenna is ensured to maximize energy receiving power, to greatly improve energy transmission efficiency and charging flexibility of the receiving apparatus.

In a possible implementation of the first aspect of this application, the transmit antenna array includes N antenna array units. The wireless charging receiving apparatus includes a first wireless charging receiving apparatus and a second wireless charging receiving apparatus. The first controller switches N1 antenna array units to an optimal polarization state corresponding to the first wireless charging receiving apparatus, and switches N2 antenna array units to an optimal polarization state corresponding to the second wireless charging receiving apparatus. A sum of N1 and N2 is less than or equal to N.

In this manner, when energy is transmitted to more than two wireless charging receiving apparatuses at the same time, even if optimal polarization states corresponding to the wireless charging receiving apparatuses are different, a polarization mismatch loss can be reduced and each wireless charging receiving apparatus can be ensured to effectively receive energy by performing polarization matching with each wireless charging receiving apparatus. Therefore, energy transmission efficiency and a charging flexibility of the receiving apparatus can be improved when energy is transmitted to a plurality of wireless charging receiving apparatuses.

In a possible implementation of the first aspect of this application, the charging request signal includes remaining battery power and/or a device type of an electronic device separately charged by using the first wireless charging receiving apparatus and the second wireless charging apparatus. The first controller determines a charging priority PL1 of the first wireless charging receiving apparatus and a charging priority PL2 of the second wireless charging receiving apparatus based on the remaining battery power and/or the device type, where N1 is greater than N2 when PL1 is higher than PL2.

In this manner, a quantity of antenna array units that perform polarization matching with a wireless charging receiving apparatus is determined based on a charging priority of the wireless charging receiving apparatus, so that a wireless charging receiving apparatus with a high charging priority can receive energy more effectively. In this way, an electronic device that has less battery power or is relatively important to a user can be charged quickly by using the wireless charging receiving apparatus, to avoid a case in which the electronic device cannot be used due to extremely low battery power, to improve user experience.

In a possible implementation of the first aspect of this application, N2 is zero.

In a possible implementation of the first aspect of this application, the wireless charging receiving apparatus further has a rectifier circuit, and the energy is obtained by the rectifier circuit by converting the power signal, and the magnitude of the energy is represented by a value of power output by the rectifier circuit.

To achieve the objective, a second aspect of this application provides a wireless charging transmitting apparatus, including: a transmit antenna array, configured to transmit a power signal in each polarization state in a plurality of polarization states, where each polarization state includes a polarization direction of an antenna of the transmit antenna array; and a first controller, configured to: when receiving a charging request signal from a wireless charging receiving apparatus, control the transmit antenna array to successively switch to each polarization state in the plurality of polarization states to transmit the power signal, determine an optimal polarization state based on feedback information sent by the wireless charging receiving apparatus, and control the transmit antenna array to switch to the optimal polarization state to transmit the power signal, where the feedback information indicates a magnitude of energy obtained by the wireless charging receiving apparatus from the power signal, and the optimal polarization state is a polarization state with maximum energy.

In the wireless charging transmitting apparatus, a multi-polarized transmit antenna array is used with reference to an optimal polarization state detection method performed in cooperation with the wireless charging receiving apparatus, optimal polarization state detection of a downlink channel can be implemented, a polarization direction of transmitting an electromagnetic wave can be intelligently adjusted and controlled, and a polarization mismatch loss can be reduced. In this way, different transmission paths and states of the wireless charging receiving apparatus can be coped with, and polarization matching between a transmit antenna and a receive antenna is ensured to maximize energy receiving power, to greatly improve energy transmission efficiency and charging flexibility of the receiving apparatus.

In a possible implementation of the second aspect of this application, the transmit antenna array includes N antenna array units. The wireless charging receiving apparatus includes a first wireless charging receiving apparatus and a second wireless charging receiving apparatus. The first controller switches N1 antenna array units to an optimal polarization state corresponding to the first wireless charging receiving apparatus, and switches N2 antenna array units to an optimal polarization state corresponding to the second wireless charging receiving apparatus. A sum of N1 and N2 is less than or equal to N.

In this manner, when energy is transmitted to more than two wireless charging receiving apparatuses at the same time, even if optimal polarization states corresponding to the wireless charging receiving apparatuses are different, a polarization mismatch loss can be reduced and each wireless charging receiving apparatus can be ensured to effectively receive energy by performing polarization matching with each wireless charging receiving apparatus. Therefore, energy transmission efficiency and a charging flexibility of the receiving apparatus can be improved when energy is transmitted to a plurality of wireless charging receiving apparatuses.

In a possible implementation of the second aspect of this application, the charging request signal includes remaining battery power and/or a device type of an electronic device separately charged by using the first wireless charging receiving apparatus and the second wireless charging apparatus. The first controller determines a charging priority PL1 of the first wireless charging receiving apparatus and a charging priority PL2 of the second wireless charging receiving apparatus based on the remaining battery power and/or the device type, where N1 is greater than N2 when PL1 is higher than PL2.

In this manner, a quantity of antenna array units that perform polarization matching with a wireless charging receiving apparatus is determined based on a charging priority of the wireless charging receiving apparatus, so that a wireless charging receiving apparatus with a high charging priority can receive energy more effectively. In this way, an electronic device that has less battery power or is relatively important to a user can be charged quickly by using the wireless charging receiving apparatus, to avoid a case in which the electronic device cannot be used due to extremely low battery power, to improve user experience.

In a possible implementation of the second aspect of this application, N2 is zero.

To achieve the objective, a third aspect of this application provides a wireless charging receiving apparatus, including a power receiving antenna, configured to receive a power signal transmitted by a wireless charging transmitting apparatus; and a second controller, configured to: when receiving the power signal transmitted by a transmit antenna array of the wireless charging transmitting apparatus when successively switching to each polarization state in a plurality of polarization states, send feedback information to the wireless charging transmitting apparatus, where the feedback information indicates a magnitude of energy obtained from the power signal.

In the wireless charging receiving apparatus, a feedback signal is sent to notify the wireless charging transmitting apparatus of a magnitude of energy obtained by the wireless charging receiving apparatus in each polarization state, and optimal polarization state detection can be performed in cooperation with the wireless charging transmitting apparatus, to reduce a polarization mismatch loss. Therefore, energy receiving efficiency and charging flexibility of the wireless charging receiving apparatus can be greatly improved.

In a possible implementation of the third aspect of this application, the wireless charging receiving apparatus further has a rectifier circuit, the energy is obtained by the rectifier circuit by converting the power signal, and the magnitude of the energy is represented by a value of power output by the rectifier circuit.

To achieve the objective, a fourth aspect of this application provides a wireless charging method, applied to a wireless charging system including a wireless charging transmitting apparatus and a wireless charging receiving apparatus. The wireless charging transmitting apparatus includes: a transmit antenna array, configured to transmit a power signal in each polarization state in a plurality of polarization states, where each polarization state includes a polarization direction of an antenna of the transmit antenna array; and a first controller. The wireless charging receiving apparatus includes a power receiving antenna, configured to receive the power signal; and a second controller. The wireless charging method includes: When receiving a charging request signal from the second controller, the first controller controls the transmit antenna array to successively switch to each polarization state in the plurality of polarization states to transmit the power signal; the second controller sends feedback information to the first controller, where the feedback information indicates a magnitude of energy obtained from the power signal; and the first controller determines an optimal polarization state based on the feedback information, and controls the transmit antenna array to switch to the optimal polarization state to transmit the power signal, where the optimal polarization state is a polarization state with maximum energy.

In a possible implementation of the fourth aspect of this application, the transmit antenna array includes N antenna array units. The wireless charging receiving apparatus includes a first wireless charging receiving apparatus and a second wireless charging receiving apparatus. The wireless charging method includes: The first controller switches N1 antenna array units to an optimal polarization state corresponding to the first wireless charging receiving apparatus, and switches N2 antenna array units to an optimal polarization state corresponding to the second wireless charging receiving apparatus. A sum of N1 and N2 is less than or equal to N.

In a possible implementation of the fourth aspect of this application, the charging request signal includes remaining battery power and/or a device type of an electronic device separately charged by using the first wireless charging receiving apparatus and the second wireless charging apparatus. The wireless charging method includes: The first controller determines a charging priority PL1 of the first wireless charging receiving apparatus and a charging priority PL2 of the second wireless charging receiving apparatus based on the remaining battery power and/or the device type, where N1 is greater than N2 when PL1 is higher than PL2.

In a possible implementation of the fourth aspect of this application, N2 is zero.

To achieve the objective, a fifth aspect of this application provides a control method for a wireless charging transmitting apparatus. The wireless charging transmitting apparatus includes: a transmit antenna array, configured to transmit a power signal in each polarization state in a plurality of polarization states, where each polarization state includes a polarization direction of an antenna of the transmit antenna array; and a first controller. The control method includes: When receiving a charging request signal from a wireless charging receiving apparatus, the first controller controls the transmit antenna array to successively switch to each polarization state in the plurality of polarization states to transmit the power signal; and the first controller determines an optimal polarization state based on feedback information sent by the wireless charging receiving apparatus, and controls the transmit antenna array to switch to the optimal polarization state to transmit the power signal, where the feedback information indicates a magnitude of energy obtained by the wireless charging receiving apparatus from the power signal, and the optimal polarization state is a polarization state with maximum energy.

In a possible implementation of the fifth aspect of this application, the transmit antenna array includes N antenna array units. The wireless charging receiving apparatus includes a first wireless charging receiving apparatus and a second wireless charging receiving apparatus. The control method includes: The first controller switches N1 antenna array units to an optimal polarization state corresponding to the first wireless charging receiving apparatus, and switches N2 antenna array units to an optimal polarization state corresponding to the second wireless charging receiving apparatus. A sum of N1 and N2 is less than or equal to N.

In a possible implementation of the fifth aspect of this application, the charging request signal includes remaining battery power and/or a device type of an electronic device separately charged by using the first wireless charging receiving apparatus and the second wireless charging apparatus. The control method includes: The first controller determines a charging priority PL1 of the first wireless charging receiving apparatus and a charging priority PL2 of the second wireless charging receiving apparatus based on the remaining battery power and/or the device type, where N1 is greater than N2 when PL1 is higher than PL2.

In a possible implementation of the fifth aspect of this application, N2 is zero.

To achieve the objective, a sixth aspect of this application provides a control method for a wireless charging receiving apparatus. The wireless charging receiving apparatus includes a power receiving antenna, configured to receive a power signal transmitted by a wireless charging transmitting apparatus; and a second controller. The control method includes: When receiving the power signal transmitted by a transmit antenna array of the wireless charging transmitting apparatus when successively switching to each polarization state in a plurality of polarization states, the second controller sends feedback information to the wireless charging transmitting apparatus, where the feedback information indicates a magnitude of energy obtained from the power signal.

By using the fourth to the sixth aspects of this application and possible implementations thereof, optimal polarization state detection of a downlink channel can be implemented, a polarization direction of transmitting an electromagnetic wave can be intelligently adjusted and controlled, a polarization mismatch loss can be reduced, and energy transmission efficiency can be greatly improved.

These and other aspects of the present invention will be more concise and easier to understand in the following (a plurality of) embodiments.

### BRIEF DESCRIPTION OF DRAWINGS

The following further describes features and a relationship between the features of the present invention with reference to the accompanying drawings. The accompanying drawings are all examples, and some features are not shown in an actual scale. In addition, some of the accompanying drawings may omit a conventional feature in the field of this application that is not necessary for this application, or show an additional feature that is not necessary for this application. A combination of the features shown in the accompanying drawings is not intended to limit this application. In addition, in the full text of this specification, same reference numerals refer to same content. Specific accompanying drawings are described as follows:
FIG. 1 is a schematic diagram of a structure of a wireless charging system according to an embodiment of this application;
FIG. 2 is a schematic diagram of an application example of a wireless charging system according to an embodiment of this application;
FIG. 3 is a schematic diagram of a structure of a wireless charging transmitting apparatus according to an embodiment of this application;
FIG. 4 is a schematic diagram of a structure of a wireless charging receiving apparatus according to an embodiment of this application;
FIG. 5 is a schematic flowchart of a wireless charging method according to an embodiment of this application;
FIG. 6 is a schematic diagram of a structure of a wireless charging receiving apparatus according to an embodiment of this application; and
FIG. 7 is a comparison diagram of energy transmission efficiency between a wireless charging method according to an embodiment of this application and a comparative example.

### DESCRIPTION OF EMBODIMENTS

First, it should be noted that, in the description of embodiments of this application, "a plurality of' refers to two or more. "First, second, third, and the like" or a similar term such as a module A, a module B, and a module C are merely used to distinguish between similar objects, and do not represent specific sorting for the objects. It may be understood that specific sequences or order may be interchanged in an allowed case, so that the embodiments of this application described herein can be implemented in a sequence other than these illustrated or described herein.

In the following description, involved numerals of steps, such as S110 and S120, do not necessarily indicate that the steps are performed according to such sequence. In an allowed case, the sequence of steps can be interchanged or the steps can be performed simultaneously. The term "include" shall not be construed as limiting content following it. It does not rule out other components or steps.

"One embodiment" or "an embodiment" mentioned in this specification means that a specific feature, structure, or characteristic described in combination with this embodiment is included in at least one embodiment of the present invention. Therefore, the term "in one embodiment" or "in an embodiment" appearing throughout this specification does not necessarily refer to a same embodiment, but may refer to a same embodiment. In addition, in one or more embodiments, specific features, structures, or characteristics may be combined in any suitable manner, as will be obvious to a person of ordinary skill in the art from the present disclosure.

"More than" related to a quantity in this specification means including the quantity itself.

Unless otherwise defined, all technical and scientific terms used in this specification have a same meaning as those commonly understood by a person skilled in the art of this application. In case of inconsistency, a meaning specified in this specification or derived from content specified in this specification is used. In addition, terms used in this specification are merely intended to describe embodiments of this application, and are not intended to limit this application.

The following describes a wireless charging system, a wireless charging transmitting apparatus, and a wireless charging receiving apparatus in detail according to embodiments of this application with reference to the accompanying drawings.

### <Summary of a Wireless Charging System 10>

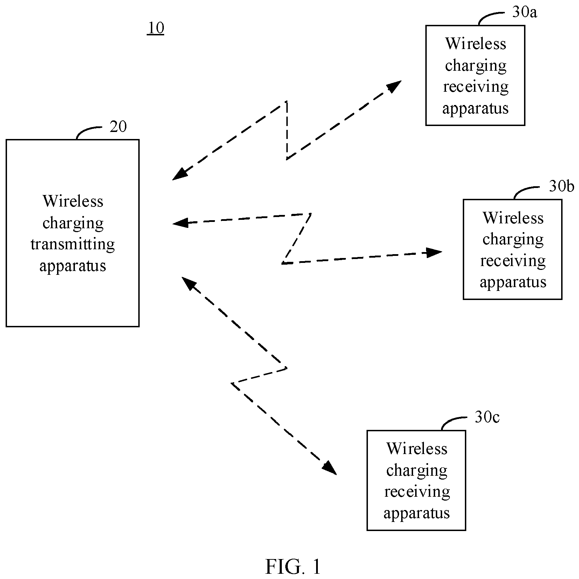

FIG. 1 is a schematic diagram of a structure of a wireless charging system 10 according to an embodiment of this application. As shown in FIG. 1, the wireless charging system 10 provided in this embodiment of this application includes a wireless charging transmitting apparatus 20 and wireless charging receiving apparatuses 30a, 30b, and 30c. Herein, a case in which the wireless charging system 10 includes three wireless charging receiving apparatuses is shown as an example in FIG. 1. However, a quantity of wireless charging receiving apparatuses is not limited thereto, and the quantity of wireless charging receiving apparatuses is one or more. In addition, in the following specification, when the wireless charging receiving apparatuses 30a, 30b, and 30c are not particularly distinguished, sometimes they may be collectively referred to as a wireless charging receiving apparatus 30.

The wireless charging transmitting apparatus 20 transmits an electromagnetic wave as a power signal to transmit energy to the wireless charging receiving apparatus 30. The wireless charging transmitting apparatus 20 can transmit energy to a plurality of wireless charging receiving apparatuses 30 at the same time or in a traversal manner. The wireless charging receiving apparatus 30 receives the power signal from the wireless charging transmitting apparatus 20, and converts the power signal into direct current energy to charge a to-be-charged device.

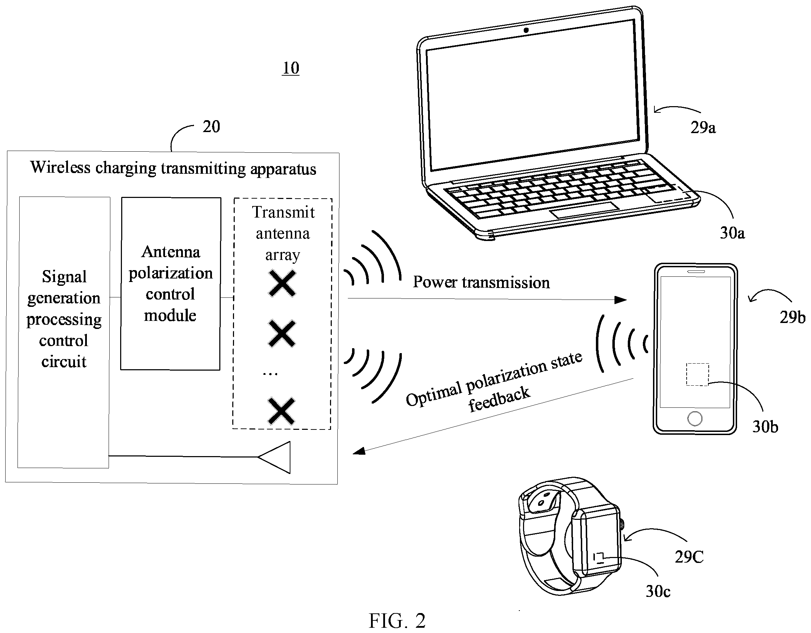

FIG. 2 is a schematic diagram of an application example of a wireless charging system 10 according to an embodiment of this application. As shown in FIG. 2, for example, the wireless charging system 10 may be configured to charge a notebook computer 29a, a smartphone 29b, and a smart watch 29c. In the application example shown in FIG. 2, wireless charging receiving apparatuses 30a, 30b, and 30c are respectively disposed in the notebook computer 29a, the smartphone 29b, and the smart watch 29c, receive a power signal transmitted by a wireless charging transmitting apparatus 20, and charge the notebook computer 29a, the smartphone 29b, and the smart watch 29c. However, the wireless charging receiving apparatus 30 is not limited to a built-in function module of a to-be-charged device shown in FIG. 2, or may be independent of a to-be-charged device and connected to the to-be-charged device by using an external interface. This is not specifically limited in this application. In addition, an electronic device used as the to-be-charged device in FIG. 2 is merely an example. The electronic device may be a wearable device, a sensor, a smart lock, or each kind of IoT (The Internet of Things; Internet of Things) device other than a smart watch.

In the wireless charging system 10 provided in this embodiment of this application, the wireless charging transmitting apparatus 20 has a transmit antenna array, and the transmit antenna array includes a plurality of polarization states. The wireless charging transmitting apparatus 20 may transmit energy to the wireless charging receiving apparatus 30 in each polarization state in the plurality of polarization states. Each polarization state includes a polarization direction of an antenna. When transmitting energy to the wireless charging receiving apparatus 30, in a polarization optimization phase (first phase), the wireless charging transmitting apparatus 20 switches a polarization state in a traversal manner to transmit energy to the wireless charging receiving apparatus 30. The wireless charging receiving apparatus 30 records direct current energy obtained through collection and conversion in different polarization states, and feeds back an optimal polarization state to the wireless charging transmitting apparatus 20 according to a principle of maximizing energy transmission and conversion. In an optimized energy transmission phase (second phase), the wireless charging transmitting apparatus 20 transmits energy to the wireless charging receiving apparatus 30 in the optimal polarization state. Therefore, an energy loss caused by antenna polarization mismatch between the wireless charging transmitting apparatus 20 and the wireless charging receiving apparatus 30 can be reduced, and energy transmission efficiency can be greatly improved.

### <Wireless Charging Transmitting Apparatus 20>

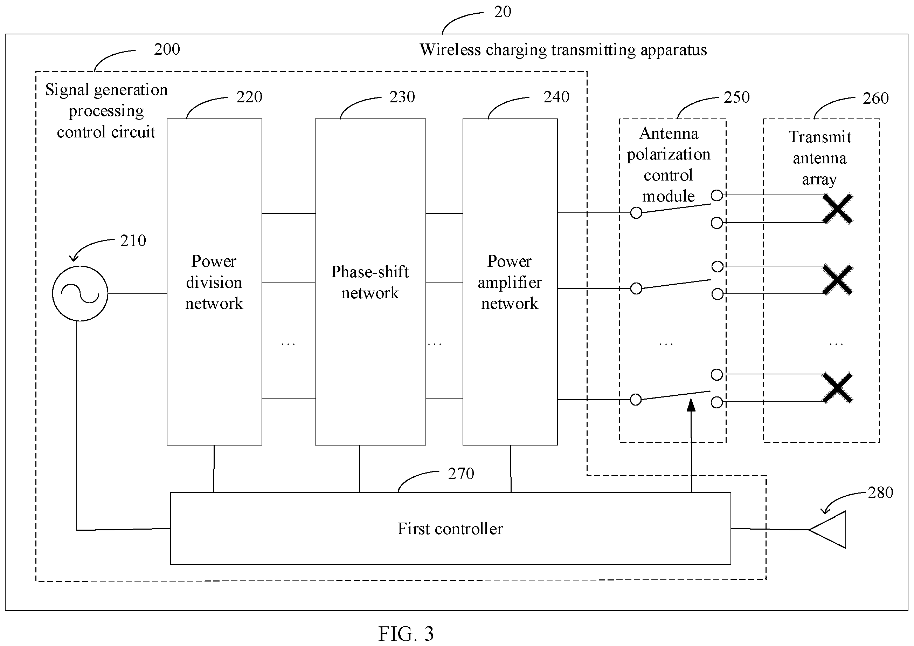

FIG. 3 is a schematic diagram of a structure of a wireless charging transmitting apparatus 20 according to an embodiment of this application. As shown in FIG. 3, the wireless charging transmitting apparatus 20 has a signal generation processing control circuit 200, an antenna polarization control module 250, a transmit antenna array 260, and a first communication antenna 280. The signal generation processing control circuit 200 includes a signal generator 210, a power division network 220, a phase-shift network 230, a power amplifier network 240, and a first controller 270. The signal generator 210, the power division network 220, the phase-shift network 230, the power amplifier network 240, the antenna polarization control module 250, and the transmit antenna array 260 are successively connected in series. The first controller 270 is connected to the signal generator 210, the phase-shift network 230, the antenna polarization control module 250, and the first communication antenna 280. In addition, although not shown in the figure, the wireless charging transmitting apparatus 20 has a power interface which may be connected to a 220V power supply, or may be powered by a battery. A power supply manner of the power interface is not limited in this application.

The signal generator 210, the power division network 220, and the phase-shift network 230 may be formed by an analog circuit, to implement generation, phase control, and amplitude control of a power signal, but are not limited thereto. Alternatively, a digital signal processing circuit may be used instead of an analog circuit to form the signal generator 210, the power division network 220, and the phase-shift network 230. The digital signal processing circuit may be implemented, for example, by using a field programmable logic gate array (FPGA) or another digital chip.

The transmit antenna array 260 has a plurality of antenna array units, and each antenna array unit may be formed by nesting a plurality of antenna elements in different polarization directions, or may be formed by an antenna with a plurality of polarization directions and feeding ports. The transmit antenna array 260 can transmit an electromagnetic wave in any polarization state in a plurality of polarization states corresponding to each polarization direction. In addition, a quantity of antenna array units is not limited to plural, or may be one. This is not specifically limited in this application. A polarization direction of each antenna element may be horizontal polarization, vertical polarization, 45-degree polarization, negative 45-degree polarization, or the like. In FIG. 3, the transmit antenna array 260 is a dual-polarized transmit antenna array with a polarization direction difference 90°. Each antenna array unit includes two antennas with a polarization direction difference 90°. However, this is only an example, and this embodiment of this application is not limited thereto.

The antenna polarization control module 250 may independently switch a polarization state of each antenna array unit of the transmit antenna array 260. That is, a polarization direction in which each antenna array unit transmits an electromagnetic wave may be independently selected by using the antenna polarization control module 250.

As shown in FIG. 3, the antenna polarization control module 250 may be, for example, a switch array including a plurality of radio frequency switches. A quantity of radio frequency switches depends on the quantity of antenna array units, and a type of the radio frequency switch depends on a quantity of polarization directions of the antenna array unit. It is assumed that the quantity of antenna array units is N (N≥1). When each antenna array unit has two polarization directions, the antenna polarization control module 250 may include N single pole double throw (SPDT) radio frequency switches. When each antenna array unit has three polarization directions, the antenna polarization control module 250 may include N single pole triple throw (SPTT) radio frequency switches. In this case, a common terminal of the radio frequency switch is connected to the power amplifier network 240, and a radio frequency port may be switched to connect the antenna array unit to select an antenna element or an antenna port with a corresponding polarization direction to transmit an electromagnetic wave. For example, when each antenna array unit has an antenna element in a first polarization direction and an antenna element in a second polarization direction, a switchable radio frequency port of an SPDT radio frequency switch may be used to select the antenna element in the first polarization direction or the antenna element in the second polarization direction to transmit an electromagnetic wave.

As described above, the first controller 270 is connected to the signal generator 210, the phase-shift network 230, the antenna polarization control module 250, and the first communication antenna 280. The first controller 270 is connected to the signal generator 210 to control signal transmission of the entire wireless charging transmitting apparatus 20; connected to the phase-shift network 230 to adjust and control a phase and control a beam radiation direction; connected to the power amplifier network 240 to control efficiency, output power, and the like of a power amplifier to adjust heat consumption of the power amplifier and output power of a system to implement closed-loop control of received power; connected to the antenna polarization control module 250 to control a polarization direction of transmitting a power signal; and connected to the first communication antenna 280 to communicate with the wireless charging receiving apparatus 30.

The first controller 270 may be a central processing unit (CPU, Central Processing Unit), another general-purpose processor, a single-chip microcomputer (Single-Chip Microcomputer), a field programmable gate array (FPGA), or the like. The first controller 270 may alternatively be any control circuit or integrated circuit with the foregoing functions. The functions include, for example, controlling a beam radiation direction, controlling amplifier power, and controlling a polarization direction of transmitting a power signal.

The following describes a summary action when the wireless charging transmitting apparatus 20 transmits energy to the wireless charging receiving apparatus 30.

After receiving a charging request signal from the wireless charging receiving apparatus 30 by using the first communication antenna 280, the first controller 270 controls the signal generator 210 to generate a power signal. The power signal enters the power division network 220 and is divided into a plurality of channels of power signals. A quantity of channels depends on a quantity of antenna array units of the multi-polarized transmit antenna array 260. The power signals on the plurality of channels subsequently enter the phase-shift network 230 for phase control, to implement electromagnetic wave transmission in a specific direction. Then, after entering the power amplifier network 240 for signal amplification, the power signals are transmitted by the transmit antenna array 260 by using the antenna polarization control module 250. The polarization state of the transmit antenna array 260 is selected by the first controller 270 by controlling the antenna polarization control module 250. Specifically, in a polarization optimization phase, the first controller 270 successively switches the polarization state of the transmit antenna array 260 by controlling the antenna polarization control module 250, to transmit energy to the wireless charging receiving apparatus 30, and sends polarization state information by using the first communication antenna 280. In an optimized energy transmission phase, the first controller 270 transmits energy to the wireless charging receiving apparatus 30 in an optimal polarization state, and the optimal polarization state depends on a magnitude of direct current energy collected by the wireless charging receiving apparatus 30 in each polarization state. In addition, a beamforming function associated with control of the phase-shift network 230 may be either before or after polarization optimization.

### < Wireless Charging Receiving Apparatus 30>

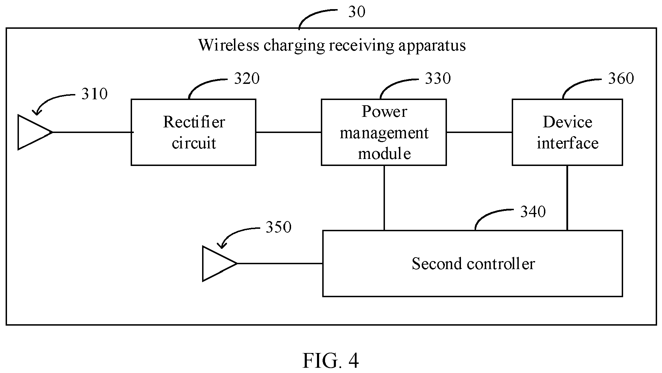

FIG. 4 is a schematic diagram of a structure of a wireless charging receiving apparatus 30 according to an embodiment of this application. As shown in FIG. 4, the wireless charging receiving apparatus 30 has a power receiving antenna 310, a rectifier circuit 320, a power management module 330, a second controller 340, and a second communication antenna 350. The power receiving antenna 310, the rectifier circuit 320, and the power management module 330 are successively connected in series. The second controller 340 is separately connected to the power management module 330 and the second communication antenna 350. The wireless charging receiving apparatus 30 further has a device interface 360, and the power management module 330 charges a to-be-charged device by using the device interface 360. The second controller 340 may determine, by using the device interface 360, whether battery power of the to-be-charged device is sufficient. In addition, the wireless charging receiving apparatus 30 may further have an energy storage component such as a capacitor battery, to store extra energy for future use.

The second controller 340 may be a central processing unit, another general-purpose processor, a single-chip microcomputer, a field programmable gate array, or the like. The second controller 340 may alternatively be any control circuit or integrated circuit with functions such as detecting and recording power and feeding back optimal polarization state information.

The following describes a summary action when the wireless charging receiving apparatus 30 receives energy from a wireless charging transmitting apparatus 20.

The second controller 340 sends a charging request signal to the wireless charging transmitting apparatus 20 by using the second communication antenna 350. The power receiving antenna 310 receives a power signal from the wireless charging transmitting apparatus 20, and transmits the power signal to the rectifier circuit 320. The rectifier circuit 320 converts radio frequency energy into direct current energy. The power management module 330 performs processing such as voltage stabilization, energy storage, and voltage conversion on the direct current energy, and charges a to-be-charged device by using a to-be-charged device interface 360. In addition, in a polarization optimization phase, the second communication antenna 350 receives polarization state information. The second controller 340 detects and records input power (or power output by the rectifier circuit 320) of the power management module 11 and corresponding polarization state information, and after the wireless charging receiving apparatus 30 completes traversal of polarization states, feeds back a polarization state in which maximum direct current energy is obtained, to the wireless charging transmitting apparatus 20, to enter an optimized energy transmission phase.

### < Specific Process of Wireless Charging >

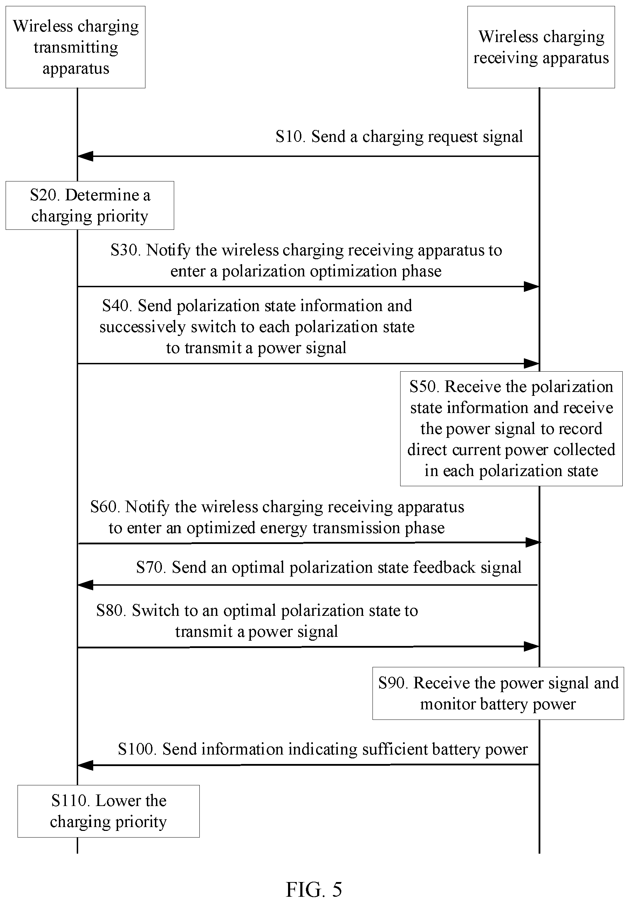

FIG. 5 is a specific schematic flowchart of a wireless charging method performed by a wireless charging system 10.

When determining, by using a device interface 360, that power of an energy storage apparatus such as a battery of a to-be-charged device is insufficient, as shown in step S10 in FIG. 5, a second controller 340 of a wireless charging receiving apparatus 30 sends a charging request signal by using a second communication antenna 350, to a wireless charging transmitting apparatus 20. For example, the charging request signal may include information such as a type of the to-be-charged device, battery power, and battery usable time.

In step S20, a first controller 270 of the wireless charging transmitting apparatus 20 determines, based on the received charging request signal, a charging priority of a to-be-charged device corresponding to the wireless charging receiving apparatus 30. In the following, the "charging priority of the to-be-charged device corresponding to the wireless charging receiving apparatus 30" is further referred to as a "charging priority of the wireless charging receiving apparatus 30". The charging priority represents an urgency degree of a charging requirement of the to-be-charged device, and a higher level indicates a more urgent charging requirement. For example, the charging priority may be determined based on more than one of information such as the battery power, the battery usable time, or the type of the to-be-charged device included in the charging request signal. For example, a to-be-charged device with low battery power may have a high charging priority, or a to-be-charged device with a short battery usable time may have a high priority, or a to-be-charged device with a type of a high degree of importance may have a high charging priority. Information about a degree of importance of each type of to-be-charged device may be pre-stored in the first controller 270.

In step S30, the first controller 270 of the wireless charging transmitting apparatus 20 sends, by using a first communication antenna 280, a polarization optimization signal used to notify the wireless charging receiving apparatus 30 to enter a polarization optimization phase.

Herein, in step S 10, when charging requests of a plurality of wireless charging receiving apparatuses 30 are received, the first controller 270 may first formulate a charging solution based on a charging priority of each wireless charging receiving apparatus 30 determined in step S20, and then transmit a polarization optimization signal to one or more preferential charging devices. The charging solution may be, for example, first performing polarization matching on a wireless charging receiving apparatus 30 with a highest charging priority in descending order of charging priorities to transmit an electromagnetic wave. The solution is referred to as a "first polarization matching solution" in the following. The charging solution may alternatively be, for example, performing polarization matching on all or a part of wireless charging receiving apparatuses 30 in a plurality of wireless charging receiving apparatuses 30 at the same time, but allocating a quantity of antenna array units in polarization matching with each wireless charging receiving apparatus 30 and/or a value of signal power based on charging priorities. The solution is referred to as "a second polarization matching solution" in the following.

When the formulated charging solution is the first polarization matching solution, in step S30, the polarization optimization signal may be sent to only the wireless charging receiving apparatus 30 with the highest charging priority. When the formulated charging solution is the second polarization matching solution, in step S30, the polarization optimization signal may be sent to each wireless charging receiving apparatus 30.

In step S40, the first controller 270 of the wireless charging transmitting apparatus 20 sends polarization state information to the wireless charging receiving apparatus 30 by using the first communication antenna 280, and successively switches to each polarization state of a transmit antenna array 260 by controlling an antenna polarization control module 250, to transmit a power signal. That is, polarization states are traversed.

Herein, it is assumed that the transmit antenna array 260 has M (M≥2) polarization states. When the polarization states are traversed, a first type of polarization state information is first sent by using the first communication antenna 280, and all antenna array units of the transmit antenna array 260 are switched to a first type of polarization state, to transmit power signals. After a time elapsing from starting of transmission of the power signal reaches a preset time threshold, a second type of polarization state information is sent by using the first communication antenna 280, and all the antenna array units of the transmit antenna array 260 are switched to a second type of polarization state, to transmit power signals, and so on until traversal of the M polarization states is completed.

When the formulated charging solution is the first polarization matching solution, and in step S30, the polarization optimization signal is sent to only the wireless charging receiving apparatus 30 with the highest charging priority, in step S40, the polarization state information needs to be sent to only the wireless charging receiving apparatus 30 with the highest charging priority. When the formulated charging solution is the second polarization matching solution, and in step S30, the polarization optimization signal is sent to each wireless charging receiving apparatus 30, in step S40, the polarization state information is sent to each wireless charging receiving apparatus 30.

In step S50, the wireless charging receiving apparatus 30 receives the polarization state information and the power signal, and detects and records direct current power collected in each polarization state. Specifically, the second controller 340 receives the polarization state information by using the second communication antenna 350; receives the power signal by using a power receiving antenna 310; converts collected radio frequency energy into direct current energy by using a rectifier circuit 320 and a power management module 330, detects direct current power in this case, and correspondingly records the direct current power and the received polarization state information. Herein, maximum direct current power during a period of transmitting a power signal in a corresponding polarization state may be recorded, or average direct current power during the period may be recorded.

After traversal of the polarization states is completed, in step S60, the first controller 270 of the wireless charging transmitting apparatus 20 sends, by using the first communication antenna 280, an optimized energy transmission signal used to notify the wireless charging receiving apparatus 30 to enter an optimized energy transmission phase.

When the formulated charging solution is the first polarization matching solution, and in step S30, the polarization optimization signal is sent to the wireless charging receiving apparatus 30 with the highest charging priority, in step S60, the optimized energy transmission signal needs to be sent to only the wireless charging receiving apparatus 30 with the highest charging priority. When the formulated charging solution is the second polarization matching solution, and in step S30, the polarization optimization signal is sent to each wireless charging receiving apparatus 30, in step S40, the optimized energy transmission signal is sent to each wireless charging receiving apparatus 30.

After receiving the optimized energy transmission signal from the wireless charging transmitting apparatus 20, in step S70, the wireless charging receiving apparatus 30 determines, based on recorded direct current power corresponding to each piece of polarization state information, an optimal polarization state in which maximum direct current energy is obtained, and sends, to the wireless charging transmitting apparatus 20, an optimal polarization state feedback signal used to feed back the optimal polarization state.

After receiving the optimal polarization state feedback signal from the wireless charging receiving apparatus 30, in step S80, the first controller 270 of the wireless charging transmitting apparatus 20 controls, based on the received optimal polarization state feedback signal, the antenna polarization control module 250 to switch the transmit antenna array 260 to the optimal polarization state to transmit a power signal.

Herein, when the formulated charging solution is the first polarization matching solution, in step S60, the first controller 270 may switch, by using the antenna polarization control module 250, all antenna array units of the transmit antenna array 260 to the optimal polarization state fed back by the wireless charging receiving apparatus 30 corresponding to the highest charging priority, and control a phase-shift network 230 and a power amplifier network 240 correspondingly for the wireless charging receiving apparatus 30 with the highest charging priority.

In addition, when the formulated charging solution is the second polarization matching solution, in step S60, the first controller 270 may separately switch, by using the antenna polarization control module 250, an antenna array unit of the transmit antenna array 260 that is allocated to each wireless charging receiving apparatus 30, to a corresponding optimal polarization state based on a quantity of antenna array units in polarization matching with and allocated by the wireless charging receiving apparatus 30 and/or a value of signal power in the formulated charging solution, and control the phase shift network 230 and the power amplifier network 240 to adjust a radiation direction and signal power of a channel corresponding to each array unit.

For example, when the formulated charging solution is that polarization matching is performed between N1 antenna array units of the transmit antenna array 260 and a wireless charging receiving apparatus 30a, and between N2 antenna array units and a wireless charging receiving apparatus 30b, if an optimal polarization state fed back by the wireless charging receiving apparatus 30a is a first polarization state and an optimal polarization state fed back by the wireless charging receiving apparatus 30b is a second polarization state, in step S60, the N1 antenna array units are switched to the first polarization state, that is, an antenna element or an antenna feeding port in a polarization direction corresponding to the first polarization state is selected to transmit an electromagnetic wave; and the N2 antenna array units are switched to the second polarization state, that is, an antenna element or an antenna feeding port in a polarization direction corresponding to the second polarization state is selected to transmit an electromagnetic wave. Herein, when a charging priority PL1 of the wireless charging receiving apparatus 30a is higher than a charging priority PL2 of the wireless charging receiving apparatus 30b, N1 may be greater than N2. In addition, N2 may also be equal to 0.

In step S90, the power receiving antenna 310 of the wireless charging receiving apparatus 30 receives the power signal to charge a to-be-charged device. The second controller 340 monitors battery power of the to-be-charged device by using the device interface 360.

When the battery power of the to-be-charged device reaches a preset value, in step S100, the second controller 340 of the wireless charging receiving apparatus 30 sends, by using the second communication antenna 350, information indicating sufficient battery power to the wireless charging transmitting apparatus 20. The information indicating sufficient battery power indicates that the battery power of the to-be-charged device charged by the wireless charging receiving apparatus 30 reaches the preset value. Herein, the preset value may be a value indicating that a battery is fully charged, or may be a value indicating that a battery is not fully charged but the battery power is enough to use for a period of time.

When the first controller 270 of the wireless charging transmitting apparatus 20 receives, by using the first communication antenna 280, the information indicating sufficient battery power from the wireless charging receiving apparatus 30, in step S110, the first controller 270 lowers the charging priority of the wireless charging receiving apparatus 30.

After the charging priority of the wireless charging receiving apparatus 30 is lowered, the wireless charging transmitting apparatus 20 stops sending the power signal, or switches an antenna array unit of the optimal polarization state corresponding to the wireless charging receiving apparatus 30 to an optimal polarization state corresponding to another wireless charging receiving apparatus 30, or reduces power of a power signal of the optimal polarization state corresponding to the wireless charging receiving apparatus 30.

When the formulated solution is the first polarization matching solution, after the charging priority of the wireless charging receiving apparatus 30 is lowered, starting from step S30, the optimal polarization state corresponding to the wireless charging receiving apparatus 30 with the highest charging priority may be selected to transmit a power signal, and so on, until charging of all to-be-charged devices is completed.

When the formulated solution is the second polarization matching solution, after a charging priority of one of wireless charging receiving apparatuses 30 is lowered, the first controller 270 may control the antenna polarization control module 250 to switch an array unit in polarization matching with the wireless charging receiving apparatus 30 to an optimal polarization state corresponding to another wireless charging receiving apparatus 30, so that the another wireless charging receiving apparatus 30 can receive more energy.

When charging of all to-be-charged devices is completed, the first controller 270 controls a signal generator 210 to stop transmitting the power signal.

The wireless charging system 10 provided in this embodiment of this application is described above, but this embodiment of this application is not limited thereto.

In the foregoing description, the wireless charging receiving apparatus 300 has the power receiving antenna 310 configured to receive power and the second communication antenna 350 configured to perform communication. However, this embodiment of this application is not limited thereto. In some embodiments, power receiving and communication may be implemented by reusing a same antenna.

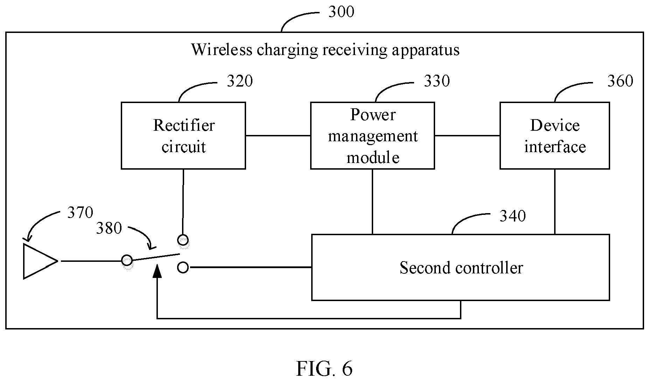

FIG. 6 is a schematic diagram of a structure of another wireless charging receiving apparatus 300 according to an embodiment of this application. In FIG. 6, a part that is the same as that of the wireless charging receiving apparatus 30 shown in FIG. 4 is marked with a same numeral, and description is omitted or simplified. As shown in FIG. 6, the wireless charging receiving apparatus 300 has a rectifier circuit 320, a power management module 330, a second controller 340, a device interface 360, an antenna 370, and an SPDT radio frequency switch 380. The antenna 370 is configured to receive power and communicate. An output end of the antenna 370 is connected to a common terminal of the SPDT radio frequency switch 380. A switchable radio frequency port of the SPDT radio frequency switch 380 is separately connected to an input end of the rectifier circuit 320 and a communication port of the second controller 340. In addition, the second controller 340 is connected to a digital control port of the SPDT radio frequency switch 380 to control the SPDT radio frequency switch 380. In a polarization detection phase, the SPDT radio frequency switch 380 is connected to the antenna 370 and the second controller 340 by default. Each time receiving new polarization state information, the SPDT radio frequency switch 380 is switched to the rectifier circuit 320. The second controller 340 records received and converted direct current energy, and then switches the SPDT radio frequency switch 380 back to the second controller 340. In an optimized energy transmission phase, after an optimal polarization state is fed back to a wireless charging transmitting apparatus 20, the SPDT radio frequency switch 380 is switched back to the rectifier circuit 320 and maintains a connection to the antenna 370 and the rectifier circuit 320 until charging is completed. In the structure shown in FIG. 6, power receiving and communication are implemented by reusing a same antenna. Compared with a structure in which a power receiving antenna and a communication antenna are separately disposed, a volume of a wireless charging receiving apparatus can be reduced.

In the foregoing description, the wireless charging transmitting apparatus 20 receives a charging request of the wireless charging receiving apparatus 30 and starts to transmit a power signal. However, this embodiment of this application is not limited thereto. In some embodiments, when the wireless charging transmitting apparatus 20 does not receive a charging request within a preset period of time, the wireless charging transmitting apparatus 20 may intermittently perform scanning and charging around within specific duration. If the wireless charging transmitting apparatus 20 receives a charging request signal during the specific duration, the wireless charging transmitting apparatus 20 may enter processing shown in FIG. 5. If a charging request is not received within a specified period of time, it may be because the wireless charging receiving apparatus 20 cannot send a charging request due to low battery power. In this case, a specific amount of battery power can be provided to the wireless charging receiving apparatus 20 by intermittently performing scanning and charging, so that the wireless charging receiving apparatus 20 can send a charging request and start processing shown in FIG. 5.

In the foregoing description, after the polarization state of the transmit antenna array 260 is selected based on the optimal polarization state feedback signal of the wireless charging receiving apparatus 30, the wireless charging transmitting apparatus 20 transmits a power signal in a same polarization state until battery power of a to-be-charged apparatus is sufficient. However, this embodiment of this application is not limited thereto. In some embodiments, the second controller 340 of the wireless charging receiving apparatus 30 may monitor input power of the power management module 330 in real time. When the input power is less than a specific degree, it is determined that an environment in which a to-be-charged device is located may change, and thus a current polarization state may no longer be an optimal polarization state. Therefore, the second controller 340 may request, by using the second communication antenna 350, the wireless charging transmitting apparatus 20 to perform polarization state matching again, to adapt to an environment change and better receive energy. Alternatively, the wireless charging transmitting apparatus 20 may send a polarization optimization signal to the wireless charging receiving apparatus 30 again when a signal indicating sufficient battery power from the wireless charging receiving apparatus 30 is not received after a specified time elapses, to perform polarization matching with the wireless charging receiving apparatus 30 again.

In the foregoing description, in the polarization optimization phase, each time the polarization state of the transmit antenna array is switched, the wireless charging transmitting apparatus 20 sends current polarization state information to the wireless charging receiving apparatus 30. However, this embodiment of this application is not limited thereto. Alternatively, in step S30, the wireless charging transmitting apparatus 20 may notify the wireless charging receiving apparatus 30 to enter the polarization optimization phase, and send, to the wireless charging receiving apparatus 30, information including next to-be-switched polarization states, a sequence, a time, and the like. In this way, in next step S30, the wireless charging transmitting apparatus 20 only needs to switch the polarization state based on a specified sequence and time. In this way, even if polarization state information is not sent each time the polarization state is switched, the wireless charging receiving apparatus 30 can also determine a switching opportunity of the polarization state based on time information in the foregoing information. In this case, the wireless charging receiving apparatus 30 learns in advance that there are several polarization states. Therefore, after traversal of the polarization states is completed, the wireless charging receiving apparatus 30 may immediately determine an optimal polarization state and feed back it to the wireless charging transmitting apparatus 20, and does not need to wait to receive a notification of entering the optimal energy transmission phase and then feed back the optimal polarization state. In this case, step S60 in FIG. 5 may also be omitted. In addition, information about a polarization traversal manner may be pre-stored in the wireless charging transmitting apparatus 20 and the wireless charging receiving apparatus 30 based on a pre-agreed standard, so that the wireless charging transmitting apparatus 20 only needs to send, to the wireless charging receiving apparatus 30, a signal used to notify to enter the polarization optimization phase.

In the foregoing description, after the wireless charging transmitting apparatus 20 completes traversal of the polarization states, the wireless charging receiving apparatus 30 feeds back the optimal polarization state to the wireless charging transmitting apparatus 20. However, this embodiment of this application is not limited thereto. Alternatively, the wireless charging transmitting apparatus 20 may transmit energy to the wireless charging receiving apparatus 30 by switching a polarization state of an antenna in a traversal manner. The wireless charging receiving apparatus 30 successively feeds back direct current energy obtained through collection and conversion in different polarization states. The wireless charging transmitting apparatus 20 selects an optimal polarization state according to a principle of maximizing energy transmission and conversion.

In the foregoing embodiment, a case in which charging requests of a plurality of wireless charging receiving apparatuses 30 are simultaneously received is listed. However, this embodiment of this application is not limited thereto. In some embodiments, in a process of transmitting an electromagnetic wave during polarization matching with one or more wireless charging receiving apparatuses 30, when a charging request of another wireless charging receiving apparatus 30 is received, it may be determined, based on charging priorities, to perform polarization matching with one or more wireless charging receiving apparatuses 30, to correspondingly change a polarization state of each antenna array unit of the transmit antenna array 260. In addition, after the wireless charging receiving apparatus 30 sends a charging request, when a polarization optimization signal from the wireless charging transmitting apparatus 20 is not received after a specified time elapses, the wireless charging receiving apparatus 30 may send a charging request signal again.

In the foregoing description, the wireless charging transmitting apparatus 20 formulates the charging solution based on the charging priority. However, this embodiment of this application is not limited thereto. In some embodiments, the charging priority may not be determined, but the charging solution is formulated based on a sequence of receiving charging requests. In this case, step S20 may be omitted.

As described above, the embodiment of this application provides the wireless charging system 10. In the wireless charging transmitting apparatus 20, the antenna polarization control module is combined with the multi-polarized transmit antenna array. With reference to the optimal polarization state detection method performed in cooperation with the wireless charging receiving apparatus, optimal polarization state detection of a downlink channel can be implemented, a polarization direction of transmitting an electromagnetic wave can be intelligently adjusted and controlled, a polarization mismatch loss can be reduced, and energy transmission efficiency and charging flexibility of the wireless charging receiving apparatus can be greatly improved.

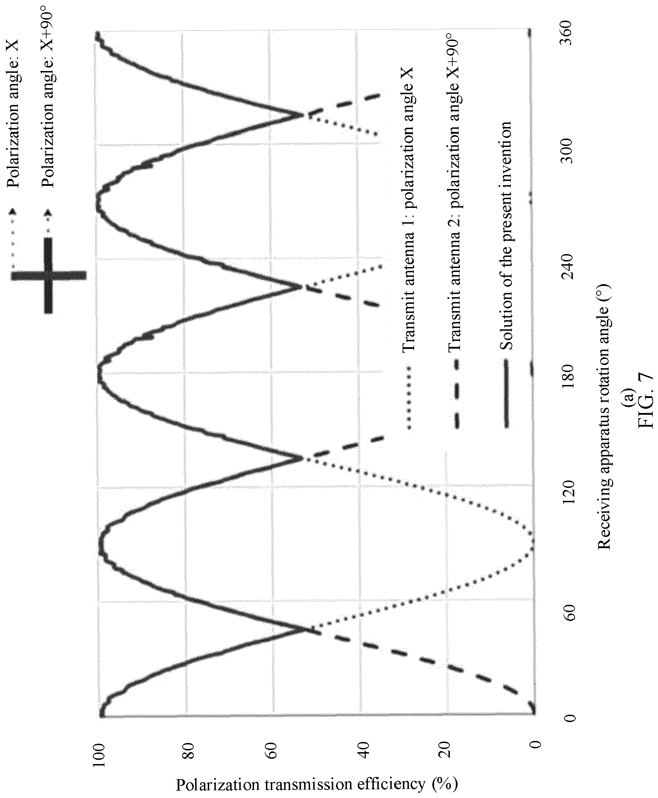

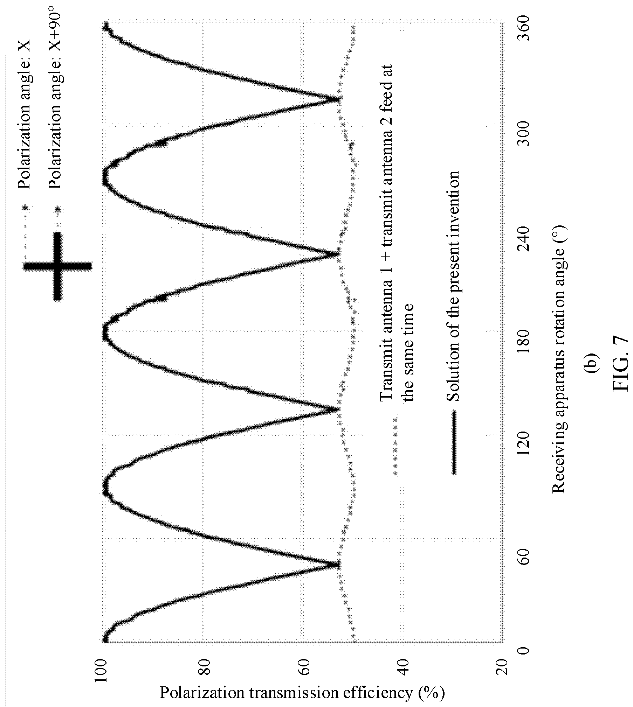

FIG. 7 is a comparison diagram of energy transmission efficiency between a wireless charging system according to an embodiment of this application and a comparative example. In FIG. 7, as a specific example of this embodiment of this application, a wireless charging transmitting apparatus performs optimal polarization state detection in cooperation with a wireless charging receiving apparatus by using a dual-polarized transmit antenna array with a polarization direction difference 90°. In addition, two comparative examples in (a) of FIG. 7 use a single-line polarization transmit antenna without performing polarization matching. Polarization directions of two single-polarized antennas in the two comparative examples are the same as two polarization directions of the transmit antenna array used in the embodiment of this application. A comparative example in (b) of FIG. 7 uses a dual-polarized antenna to feed simultaneously. As shown in (a) of FIG. 7, compared with a conventional solution of a single-line polarization transmit antenna, in this embodiment of this application, antenna polarization adjustment and control is performed with reference to a feedback signal of the wireless charging receiving apparatus. In theory, polarization transmission efficiency of more than 50% is maintained, energy transmission efficiency is significantly improved, and energy waste is effectively avoided. As shown in (b) of FIG. 7, this embodiment of this application also has higher energy transmission efficiency to effectively avoid energy waste compared with a conventional solution of simultaneous feeding by a dual-polarized antenna.

In addition, in a solution in the conventional technology that polarization information of an uplink channel is detected based on a beacon signal sent by the wireless charging receiving apparatus, an analyzed polarization information path is from a receiving apparatus to a transmitting apparatus, and is reciprocal to a path from a transmitting apparatus to a receiving apparatus during wireless energy transmission. Therefore, transmission paths are required to be reciprocal. When the transmission paths are not reciprocal, the solution fails. In contrast, in this embodiment of this application, a polarization state is switched in a traversal manner by a transmitting apparatus, and an optimal polarization apparatus is determined based on a magnitude of energy obtained in each polarization state by a receiving apparatus, so that an optimal polarization state of a downlink channel can be directly detected. Even if a path from the transmitting apparatus to the receiving apparatus is not reciprocal, polarization matching between a transmit antenna and a receive antenna can be effectively performed, ensuring that polarization matching can be performed in different transmission paths and states of the receiving apparatus to maximize receiving power. Therefore, a solution in this embodiment of this application has a wider adaptation scope.

In addition, it may be assumed that a polarization reconfigurable antenna is used in the wireless charging receiving apparatus, and antenna polarization reconstruction is performed in a receiving apparatus to improve energy receiving efficiency of the receiving apparatus. However, in this solution, space occupied by the receive antenna increases, and a volume of the receiving apparatus increases, and the receiving apparatus cannot be built in some electronic devices with a relatively small appearance. Therefore, an application range is limited. In addition, antenna polarization reconstruction is performed only in the wireless charging receiving apparatus, but optimization adjustment is not performed on the wireless charging transmitting apparatus. From a perspective of an entire system, energy transmission efficiency does not reach an optimal value, and there is room for improvement. In contrast, in this embodiment of this application, the wireless charging transmitting apparatus selects a polarization state in which the wireless charging receiving apparatus can receive maximum energy to transmit a power signal. Therefore, both energy receiving efficiency of a receiving apparatus and energy transmission efficiency of an entire system are significantly improved, and energy waste can be reduced. In addition, the wireless charging receiving apparatus does not need to be provided with a polarization reconfigurable antenna, and energy receiving efficiency can be improved without causing a volume increase. Therefore, even an electronic device with a relatively small appearance can be built with the wireless charging receiving apparatus in this embodiment of this application, and an application scope is wider.

Based on the foregoing description, embodiments of this application are summarized as follows.

An embodiment of this application provides a wireless charging system 10, including a wireless charging transmitting apparatus 20 and a wireless charging receiving apparatus 30. The wireless charging transmitting apparatus 20 includes a transmit antenna array 260 and a first controller 270. The wireless charging receiving apparatus 30 includes a power receiving antenna 310 and a second controller 340. When receiving a charging request signal from the second controller 340, the first controller 270 controls the transmit antenna array 260 to successively switch to each polarization state in a plurality of polarization states to transmit the power signal. The second controller 340 sends feedback information to the first controller 270, and the feedback information indicates a magnitude of energy obtained from the power signal. The first controller 270 determines an optimal polarization state based on the feedback information, and controls the transmit antenna array 270 to switch to the optimal polarization state to transmit the power signal, and the optimal polarization state is a polarization state with maximum energy.

In the wireless charging system 10, the transmit antenna array 260 successively switches to each polarization state in the plurality of polarization states to transmit the power signal, and determines, based on the feedback information sent by the wireless charging receiving apparatus 30, the polarization state in which maximum energy is obtained by the wireless charging receiving apparatus 30, so that the transmit antenna array 260 transmits the power signal in the polarization state. Therefore, optimal polarization state detection of a downlink channel can be implemented, a polarization direction of transmitting an electromagnetic wave can be intelligently adjusted and controlled, and a polarization mismatch loss can be reduced. In this way, different transmission paths and states of the wireless charging receiving apparatus can be coped with, and polarization matching between a transmit antenna and a receive antenna is ensured to maximize energy receiving power, to greatly improve energy transmission efficiency and charging flexibility of the receiving apparatus.

Optionally, the transmit antenna array 260 includes N antenna array units. The wireless charging receiving apparatus 30 includes a first wireless charging receiving apparatus and a second wireless charging receiving apparatus. The first controller 270 switches N1 antenna array units to an optimal polarization state corresponding to the first wireless charging receiving apparatus, and switches N2 antenna array units to an optimal polarization state corresponding to the second wireless charging receiving apparatus. A sum of N1 and N2 is less than or equal to N.

In this manner, when energy is transmitted to more than two wireless charging receiving apparatuses at the same time, a polarization mismatch loss can be reduced and each wireless charging receiving apparatus can be ensured to effectively receive energy by performing polarization matching with each wireless charging receiving apparatus.

Optionally, the charging request signal includes remaining battery power and/or a device type of an electronic device separately charged by using the first wireless charging receiving apparatus and the second wireless charging apparatus. The first controller 270 determines a charging priority PL1 of the first wireless charging receiving apparatus and a charging priority PL2 of the second wireless charging receiving apparatus based on the remaining battery power and/or the device type, where N1 is greater than N2 when PL1 is higher than PL2. N2 may be zero.

In this manner, a wireless charging receiving apparatus with a high charging priority can receive energy more effectively. In this way, an electronic device that has less battery power or is relatively important to a user can be charged quickly by using the wireless charging receiving apparatus, to avoid a case in which the electronic device cannot be used due to extremely low battery power, to improve user experience.

Optionally, the wireless charging receiving apparatus 30 further has a rectifier circuit 320, the energy is obtained by the rectifier circuit 320 by converting the power signal, and a magnitude of the energy may be represented by a value of power output by the rectifier circuit 320.

An embodiment of this application further provides a wireless charging transmitting apparatus 20, including: a transmit antenna array 260, configured to transmit a power signal in each polarization state in a plurality of polarization states, where each polarization state includes a polarization direction of an antenna of the transmit antenna array; and a first controller 270, configured to: when receiving a charging request signal from a wireless charging receiving apparatus 30, control the transmit antenna array 260 to successively switch to each polarization state in the plurality of polarization states to transmit the power signal, determine an optimal polarization state based on feedback information sent by the wireless charging receiving apparatus 30, and control the transmit antenna array 260 to switch to the optimal polarization state to transmit the power signal. The feedback information indicates a magnitude of energy obtained by the wireless charging receiving apparatus 30 from the power signal, and the optimal polarization state is a polarization state with maximum energy.

In the wireless charging transmitting apparatus 20, a multi-polarized transmit antenna array 260 is used with reference to an optimal polarization state detection method performed in cooperation with the wireless charging receiving apparatus 30, optimal polarization state detection of a downlink channel can be implemented, a polarization direction of transmitting an electromagnetic wave can be intelligently adjusted and controlled, and a polarization mismatch loss can be reduced. In this way, different transmission paths and states of the wireless charging receiving apparatus can be coped with, and polarization matching between a transmit antenna and a receive antenna is ensured to maximize energy receiving power, to greatly improve energy transmission efficiency and charging flexibility of the receiving apparatus.

An embodiment of this application further provides a wireless charging receiving apparatus 30, including: a power receiving antenna 310, configured to receive a power signal transmitted by a wireless charging transmitting apparatus 20; and a second controller 340, configured to: receiving the power signal transmitted by a transmit antenna array 260 of the wireless charging transmitting apparatus 20 when successively switching to each polarization state in a plurality of polarization states, send feedback information to the wireless charging transmitting apparatus 20, where the feedback information indicates a magnitude of energy obtained from the power signal.

In the wireless charging receiving apparatus 30, a feedback signal is sent to notify the wireless charging transmitting apparatus 20 of a magnitude of energy obtained by the wireless charging receiving apparatus 30 in each polarization state, and optimal polarization state detection can be performed in cooperation with the wireless charging transmitting apparatus 20, to reduce a polarization mismatch loss. Therefore, energy receiving efficiency and charging flexibility of the wireless charging receiving apparatus 30 can be greatly improved.

An embodiment of this application further provides a wireless charging method, applied to a wireless charging system 10 including a wireless charging transmitting apparatus 20 and a wireless charging receiving apparatus 30. The wireless charging transmitting apparatus 20 includes a transmit antenna array 260 and a first controller 270. The wireless charging receiving apparatus 30 includes a power receiving antenna 310 and a second controller 340. The wireless charging method includes: When receiving a charging request signal from the second controller 340, the first controller 270 controls the transmit antenna array 260 to successively switch to each polarization state in a plurality of polarization states to transmit a power signal; the second controller 340 sends feedback information to the first controller 270, where the feedback information indicates a magnitude of energy obtained from the power signal; and the first controller 270 determines an optimal polarization state based on the feedback information, and controls the transmit antenna array 260 to switch to the optimal polarization state to transmit the power signal, where the optimal polarization state is a polarization state with maximum energy. In this way, optimal polarization state detection of a downlink channel can be implemented, a polarization direction of transmitting an electromagnetic wave can be intelligently adjusted and controlled, a polarization mismatch loss can be reduced, and energy transmission efficiency can be greatly improved.

An embodiment of this application further provides a control method for a wireless charging transmitting apparatus 20. The wireless charging transmitting apparatus 20 includes a transmit antenna array 260 and a first controller 270. The control method includes: When receiving a charging request signal from a wireless charging receiving apparatus 30, the first controller 270 controls the transmit antenna array 260 to successively switch to each polarization state in a plurality of polarization states to transmit a power signal; and the first controller 270 determines an optimal polarization state based on feedback information sent by the wireless charging receiving apparatus 30, and controls the transmit antenna array 260 to switch to the optimal polarization state to transmit the power signal, where the feedback information indicates a magnitude of energy obtained by the wireless charging receiving apparatus 30 from the power signal, and the optimal polarization state is a polarization state with maximum energy. In this way, optimal polarization state detection of a downlink channel can be implemented, a polarization direction of transmitting an electromagnetic wave can be intelligently adjusted and controlled, a polarization mismatch loss can be reduced, and energy transmission efficiency can be greatly improved.

An embodiment of this application further provides a control method for a wireless charging receiving apparatus 30. The wireless charging receiving apparatus 30 includes a power receiving antenna 310 and a second controller 340. The control method includes: When receiving a power signal transmitted by a transmit antenna array 260 of a wireless charging transmitting apparatus 20 when successively switching to each polarization state in a plurality of polarization states, the second controller 340 sends feedback information to the wireless charging transmitting apparatus 20, where the feedback information indicates a magnitude of energy obtained from the power signal. In this way, optimal polarization state detection can be performed in cooperation with the wireless charging transmitting apparatus 20, to reduce a polarization mismatch loss. Therefore, energy receiving efficiency and charging flexibility of the wireless charging receiving apparatus 30 can be greatly improved.

It should be noted that, in embodiments of this application, module or unit division is an example, and is merely logical function division. In actual implementation, there may be another division manner. For example, each function module or function unit may be obtained through division based on various functions, or two or more functions may be integrated into one module. The foregoing integrated module may be implemented in a form of hardware, or may be implemented in a form of a software function module or function unit.

The foregoing describes merely preferred embodiments of this application and used technical principles. A person skilled in the art will understand that the present invention is not limited to specific embodiments described herein, and a person skilled in the art may make various obvious changes, adjustments, and substitutions without departing from a protection scope of the present invention. Therefore, although this application is described in detail by using foregoing embodiments, the present invention is not merely limited to the foregoing embodiments, and may further include more other equivalent embodiments without departing from the concept of the present invention, which all fall within the protection scope of the present invention.

## Claims

1. A wireless charging system,
comprising: a wireless charging transmitting apparatus and a wireless charging receiving apparatus, wherein the wireless charging transmitting apparatus comprises a transmit antenna array, configured to transmit a power signal in each polarization state in a plurality of polarization states; and a first controller, wherein each polarization state comprises a polarization direction of an antenna of the transmit antenna array;
the wireless charging receiving apparatus comprises a power receiving antenna, configured to receive the power signal; and a second controller;
when receiving a charging request signal from the second controller, the first controller controls the transmit antenna array to successively switch to each polarization state in the plurality of polarization states to transmit the power signal;
the second controller sends feedback information to the first controller, wherein the feedback information indicates a magnitude of energy obtained from the power signal; and
the first controller determines an optimal polarization state based on the feedback information, and controls the transmit antenna array to switch to the optimal polarization state to transmit the power signal, wherein the optimal polarization state is a polarization state with maximum energy.

2. The wireless charging system according to claim 1, wherein
the transmit antenna array comprises N antenna array units; and
the wireless charging receiving apparatus comprises a first wireless charging receiving apparatus and a second wireless charging receiving apparatus, the first controller switches N1 antenna array units to an optimal polarization state corresponding to the first wireless charging receiving apparatus, and switches N2 antenna array units to an optimal polarization state corresponding to the second wireless charging receiving apparatus, and a sum of N1 and N2 is less than or equal to N.

3. The wireless charging system according to claim 2, wherein
the charging request signal comprises remaining battery power and/or a device type of an electronic device separately charged by using the first wireless charging receiving apparatus and the second wireless charging apparatus; and
the first controller determines a charging priority PL1 of the first wireless charging receiving apparatus and a charging priority PL2 of the second wireless charging receiving apparatus based on the remaining battery power and/or the device type, wherein N1 is greater than N2 when PL1 is higher than PL2.

4. The wireless charging system according to claim 3, wherein N2 is zero.

5. The wireless charging system according to any one of claims 1 to 4, wherein
the wireless charging receiving apparatus further has a rectifier circuit, the energy is obtained by the rectifier circuit by converting the power signal, and the magnitude of the energy is represented by a value of power output by the rectifier circuit.

6. A wireless charging transmitting apparatus, comprising:
a transmit antenna array, configured to transmit a power signal in each polarization state in a plurality of polarization states, wherein each polarization state comprises a polarization direction of an antenna of the transmit antenna array; and
a first controller, configured to: when receiving a charging request signal from a wireless charging receiving apparatus, control the transmit antenna array to successively switch to each polarization state in the plurality of polarization states to transmit the power signal, determine an optimal polarization state according to feedback information sent by the wireless charging receiving apparatus, and control the transmit antenna array to switch to the optimal polarization state to transmit the power signal, wherein the feedback information indicates a magnitude of energy obtained by the wireless charging receiving apparatus from the power signal, and the optimal polarization state is a polarization state with maximum energy.

7. The wireless charging transmitting apparatus according to claim 6, wherein
the transmit antenna array comprises N antenna array units;
the wireless charging receiving apparatus comprises a first wireless charging receiving apparatus and a second wireless charging receiving apparatus; and
the first controller switches N1 antenna array units to an optimal polarization state corresponding to the first wireless charging receiving apparatus, and switches N2 antenna array units to an optimal polarization state corresponding to the second wireless charging receiving apparatus, and a sum of N1 and N2 is less than or equal to N.

8. The wireless charging transmitting apparatus according to claim 7, wherein
the charging request signal comprises remaining battery power and/or a device type of an electronic device separately charged by using the first wireless charging receiving apparatus and the second wireless charging apparatus; and
the first controller determines a charging priority PL1 of the first wireless charging receiving apparatus and a charging priority PL2 of the second wireless charging receiving apparatus based on the remaining battery power and/or the device type, wherein N1 is greater than N2 when PL1 is higher than PL2.

9. The wireless charging transmitting apparatus according to claim 8, wherein N2 is zero.

10. A wireless charging receiving apparatus, comprising:
a power receiving antenna, configured to receive a power signal transmitted by a wireless charging transmitting apparatus; and
a second controller, configured to: when receiving the power signal transmitted by a transmit antenna array of the wireless charging transmitting apparatus when successively switching to each polarization state in a plurality of polarization states, send feedback information to the wireless charging transmitting apparatus, wherein the feedback information indicates a magnitude of energy obtained from the power signal.

11. The wireless charging receiving apparatus according to claim 10, further comprising:
a rectifier circuit, wherein the energy is obtained by the rectifier circuit by converting the power signal, and the magnitude of the energy is represented by a value of power output by the rectifier circuit.

12. A wireless charging method,
applied to a wireless charging system comprising a wireless charging transmitting apparatus and a wireless charging receiving apparatus, wherein
the wireless charging transmitting apparatus comprises a transmit antenna array, configured to transmit a power signal in each polarization state in a plurality of polarization states, and each polarization state comprises a polarization direction of an antenna of the transmit antenna array; and a first controller;
the wireless charging receiving apparatus comprises a power receiving antenna, configured to receive the power signal; and a second controller; and
the wireless charging method comprises:
when receiving a charging request signal from the second controller, controlling, by the first controller, the transmit antenna array to successively switch to each polarization state in the plurality of polarization states to transmit the power signal;
sending, by the second controller, feedback information to the first controller, wherein the feedback information indicates a magnitude of energy obtained from the power signal; and
determining, by the first controller, an optimal polarization state based on the feedback information, and controlling the transmit antenna array to switch to the optimal polarization state to transmit the power signal, wherein the optimal polarization state is a polarization state with maximum energy.

13. The wireless charging method according to claim 12, wherein
the transmit antenna array comprises N antenna array units;
the wireless charging receiving apparatus comprises a first wireless charging receiving apparatus and a second wireless charging receiving apparatus; and
the wireless charging method comprises: switching, by the first controller, N1 antenna array units to an optimal polarization state corresponding to the first wireless charging receiving apparatus, and switching N2 antenna array units to an optimal polarization state corresponding to the second wireless charging receiving apparatus, wherein a sum of N1 and N2 is less than or equal to N.

14. The wireless charging method according to claim 13, wherein
the charging request signal comprises remaining battery power and/or a device type of an electronic device separately charged by using the first wireless charging receiving apparatus and the second wireless charging apparatus; and
the wireless charging method comprises: determining, by the first controller, a charging priority PL1 of the first wireless charging receiving apparatus and a charging priority PL2 of the second wireless charging receiving apparatus based on the remaining battery power and/or the device type, wherein N1 is greater than N2 when PL1 is higher than PL2.

15. The wireless charging method according to claim 14, wherein N2 is zero.

16. A control method for a wireless charging transmitting apparatus, wherein
the wireless charging transmitting apparatus comprises a transmit antenna array, configured to transmit a power signal in each polarization state in a plurality of polarization states, and each polarization state comprises a polarization direction of an antenna of the transmit antenna array; and a first controller; and
the control method comprises:
when receiving a charging request signal from a wireless charging receiving apparatus, controlling, by the first controller, the transmit antenna array to successively switch to each polarization state in the plurality of polarization states to transmit the power signal; and
determining, by the first controller, an optimal polarization state based on feedback information sent by the wireless charging receiving apparatus, and controlling the transmit antenna array to switch to the optimal polarization state to transmit the power signal, wherein the feedback information indicates a magnitude of energy obtained by the wireless charging receiving apparatus from the power signal, and the optimal polarization state is a polarization state with maximum energy.

17. The control method according to claim 16, wherein
the transmit antenna array comprises N antenna array units;
the wireless charging receiving apparatus comprises a first wireless charging receiving apparatus and a second wireless charging receiving apparatus; and
the control method comprises: switching, by the first controller, N1 antenna array units to an optimal polarization state corresponding to the first wireless charging receiving apparatus, and switching N2 antenna array units to an optimal polarization state corresponding to the second wireless charging receiving apparatus, wherein a sum of N1 and N2 is less than or equal to N.

18. The control method according to claim 17, wherein
the charging request signal comprises remaining battery power and/or a device type of an electronic device separately charged by using the first wireless charging receiving apparatus and the second wireless charging apparatus; and
the control method comprises: determining, by the first controller, a charging priority PL1 of the first wireless charging receiving apparatus and a charging priority PL2 of the second wireless charging receiving apparatus based on the remaining battery power and/or the device type, wherein N1 is greater than N2 when PL1 is higher than PL2.

19. The control method according to claim 18, wherein N2 is zero.

20. A control method for a wireless charging receiving apparatus, wherein
the wireless charging receiving apparatus comprises a power receiving antenna, configured to receive a power signal transmitted by a wireless charging transmitting apparatus; and a second controller; and
the control method comprises: when receiving the power signal transmitted by a transmit antenna array of the wireless charging transmitting apparatus when successively switching to each polarization state in a plurality of polarization states, sending, by the second controller, feedback information to the wireless charging transmitting apparatus, wherein the feedback information indicates a magnitude of energy obtained from the power signal.
